# EUROPÄISCHE PATENTANMELDUNG

(11) **EP 3 842 878 A1**
(43) Veröffentlichungstag der Anmeldung: **30.06.2021**
(21) Anmeldenummer: 20212245.3
(22) Anmeldetag: 07.12.2020
(51) Int. Cl.: G05B 19/042, G05B 23/02

(54) **BETRIEBSZUSTANDSANZEIGEVORRICHTUNG**

(30) Priorität: 23.12.2019 DE 102019135683
(71) Anmelder: WERMA Holding GmbH + Co. KG, 78604 Rietheim-Weilheim (DE)
(72) Erfinder: Höhler, Christian, 78669 Wellendingen (DE); Kensy, Daniel, 78532 Tuttlingen (DE)
(74) Vertreter: Otten, Roth, Dobler & Partner mbB Patentanwälte

(57) **Zusammenfassung**

Die Erfindung betrifft eine Betriebszustandsanzeigevorrichtung zur optischen und/oder akustischen Anzeige von wenigstens einem Betriebszustand bzw. von mehreren, unterschiedlichen Betriebszuständen eines technischen Gerätes, wie einer Maschine, einer Anlage, eines Fahrzeugs oder dergleichen, mit wenigstens einem optischen und/oder akustischen Anzeige- und/oder Warnelement, wobei eine Einstellung und/oder Anpassung zumindest eines Betriebsparameter des Anzeige-und/oder Warnelements wie Leuchtfarbe, Farbintensität, Leuchtbild, Lautstärke, Melodie, Tonfolge oder dergleichen vorgesehen ist, wobei wenigstens eine von dem technischen Gerät kommende Eingangsleitung zur Übermittlung der Information über wenigstens einen Betriebszustand und wenigstens eine Steuerleitung zu dem Anzeige- und/oder Warnelement zur Ansteuerung der Anzeige des Betriebszustandes vorhanden ist. Sie zeichnet sich dadurch aus, dass eine Schnittstelleneinheit zur Weiterleitung der von dem technischen Gerät eingehenden Information des Betriebszustandes zu einer externen Logikeinheit und/oder zum Empfang eines Steuersignals von der externen Logikeinheit zur direkten Ansteuerung eines oder mehrerer Anzeige- oder Warnelemente vorgesehen ist.

## Beschreibung

Die Erfindung betrifft eine Vorrichtung zur Anzeige eines Betriebszustandes nach dem Oberbegriff des Anspruchs 1.

Derartige Vorrichtungen werden bei verschiedenen technischen Geräten, wie Maschinen, Anlagen, Fahrzeugen oder dergleichen verwendet, um über beispielsweise optische Anzeige oder akustische Anzeige einen Betriebszustand des technischen Geräts anzuzeigen und gegebenenfalls davor zu warnen. So kann beispielsweise der störungsfreie Betrieb oder der Stillstand einer Maschine aufgrund einer Störung angezeigt werden. Bei einer Anlage kann beispielsweise angezeigt werden, dass ein Durchtritt freigegeben oder gesperrt ist. Bei einem Fahrzeug kann beispielsweise angezeigt werden, wenn sich das Fahrzeug bewegt, insbesondere kann vor einer Rückwärtsfahrt gewarnt werden. Diese und viele andere Funktionen können von einer anspruchsgemäßen Anzeigevorrichtung wahrgenommen werden.

Vielfach sind derartige Anzeigevorrichtungen als sogenannte Signalsäulen mit Wechselmodulen ausgebildet. Derartige Signalsäulen sind beispielsweise in den Druckschriften DE 100 58 695 A1, EP 3007 517 A1, EP 2 182 776 A1, EP 2765 562 A1, EP 1 650 721 A1 oder EP 1575 011 A1 beschrieben.

Anzeigevorrichtungen nach dem Stand der Technik sind in der Regel mit dem jeweiligen technischen Gerät über eine Kabelverbindung verbunden, über die die Information über den anzuzeigenden Betriebszustand übertragen wird. Eine Logikeinheit innerhalb der Anzeigevorrichtung setzt diese Information in eine Ansteuerung eines Anzeige- oder Warnelementes um, sodass die entsprechende Anzeige erfolgt. Beispielsweise kann ein optisches Warnelement in einer für die Anzeige des anzuzeigenden Betriebszustandes vorgesehenen Farbe aufleuchten. Auch ein akustisches Warnelement kann beispielsweise entsprechend angesteuert werden. Eine interne Logikeinheit verknüpft also eine oder mehrere Eingangsgrößen, so dass daraus eine oder mehrere Ausgangsgrößen entstehen.

Darüber hinaus sind beispielsweise durch die Druckschriften EP 2 209 099 A1 oder EP 2 182 494 A1 Signalsäulen bekannt geworden, die über ein Funkmodul mit einer Datenverarbeitungseinheit in Verbindung treten können. Insbesondere kann über mehrere derartige Signalsäulen auch ein Netzwerk aufgebaut werden. Über ein solches Netzwerk kann beispielsweise der an einem Ort an einem bestimmten technischen Gerät auftretende Betriebszustand nicht nur an der vor Ort zugeordneten Signalsäule angezeigt werden, sondern es kann durch Ansteuerung über das Netzwerk auch eine davon entfernt angeordnete Signalsäule eine entsprechende Anzeige vornehmen, beispielsweise in der Nähe einer Überwachungsperson in einer Fabrikhalle. Die Logikeinheit eines solchen Signalgerätenetzwerks verwendet zur Ansteuerung einer solchen weiteren Signalsäule die gleiche interne Logikeinheit, die zur direkten Ansteuerung und Verkabelung mit einem technischen Gerät vorgesehen ist. Durch diese interne Logikeinheit sind die möglichen Signale, die abgegeben werden können, und die signalauslösenden Ereignisse vorgegeben.

Aufgabe der Erfindung ist es demgegenüber, eine Anzeigevorrichtung vorzuschlagen, die variabler ansteuerbar ist.

Diese Aufgabe wird ausgehend von einer Anzeigevorrichtung nach dem Oberbegriff des Anspruchs 1 durch dessen kennzeichnende Merkmale gelöst.

Durch die in den Unteransprüchen genannten Merkmale sind vorteilhafte Ausführungen und Weiterbildungen der Erfindung möglich.

Dementsprechend zeichnet sich eine erfindungsgemäße Vorrichtung dadurch aus, dass eine Schnittstelleneinheit zur Weiterleitung der von dem technischen Gerät eingehenden Information des anzuzeigenden Betriebszustandes zu einer externen Logikeinheit und/oder zum Empfang eines Steuersignals von der externen Logikeinheit zur direkten Ansteuerung eines oder mehrerer Anzeige- oder Warnelemente vorgesehen ist. Auch eine solche externe Logikeinheit verknüpft eine oder mehrere Eingangsgrößen, so dass daraus eine oder mehrere Ausgangsgrößen entstehen.

Derartige Eingangsgrößen können beispielsweise als Wartungsinformationen, Materialmängelinformationen, Datum/Uhrzeit, Schichtwechselinformationen, Materialfehlerinformationen, Energieversorgungsinformationen oder dergleichen vorliegen. Als Ausgangsgrößen, bei denen Signale der externen Logikeinheit zum Schalten der Signalzustände führen, kommen beispielsweise vorhandene oder drohende Störungen, Materialmängel, geplante oder vorbeugende Wartungen, anstehende Personalwechsel, Sprachausgabeinformationen, Textinformationen, Gefahrensituationen, Auftragswechsel, "alles-in-Ordnung"-Informationen, Performance Probleme, Abweichungen von Ist- zu Soll-Werten oder dergleichen in Betracht.

Durch diese Maßnahme wird nun eine variablere Anzeige durch die erfindungsgemäße Vorrichtung möglich, da die Funktion der Anzeige- oder der Warnelemente extern gesteuert werden kann. Es ist also möglich, durch Änderung der externen Ansteuerung die Anzeige- oder Warnfunktion zu verändern, beispielsweise indem die Farbgebung eines optischen Signals, Leuchtzeiten, Leuchtsequenzen, eine Leuchtabfolge unterschiedlicher Farbsegmente oder dergleichen durch die externe Logikeinheit verändert wird. Die gleiche variable Ansteuerung ergibt sich auch für akustische Anzeigen oder Warnelemente, d. h. insgesamt für alle Arten des Betriebs der Anzeige- oder Warnelemente. Insbesondere ist dabei die Variabilität dadurch erhöht, dass die Anzeige- oder Warnfunktion durch eine einfache Änderung der Software oder der Parametrisierung in der externen Logikeinheit veränderbar ist.

Durch die Verwendung einer externen Logikeinheit ist zudem die Berücksichtigung weiterer externer Informationen möglich, die nicht unmittelbar von dem jeweiligen technischen Gerät stammen, um diese in die Funktion des oder der angesteuerten Anzeige-oder Warnelemente einfließen zu lassen. Derartige externe zusätzliche Informationen können beispielsweise Informationen über den Betriebszustand weiterer technischer Geräte, aber auch logistische oder weitere technische Informationen sein. So können beispielsweise Auftragsbestände, Stückzahlen, Stücklisten, Produktivität, Rüstvorgänge oder dergleichen berücksichtigt werden, um bestimmte Anzeigen oder Warnungen bei der erfindungsgemäßen Anzeigevorrichtung anzusteuern. Auch Sensorinformationen, beispielsweise über Vibrationen einer Maschine, andere Störgründe, Umgebungswerte wie beispielsweise Temperatur oder Luftfeuchtigkeit können bei der Art der Ansteuerung der Anzeigevorrichtung berücksichtigt werden. Darüber hinaus kann die externe Logikeinheit beispielsweise auch direkte Eingaben wie Sprache oder Sprachbefehle oder Befehle über Textnachrichten, etc. zur Ansteuerung einer passenden Anzeige verwenden.

Die Art und Auswahl der zur Verfügung stehenden Signale sind also in der externen Logikeinheit ebenso variabel einzurichten, wie die Signal auslösenden Umstände oder Ereignisse.

Weiterhin ist es von Vorteil, wenn die die Schnittstelleneinheit zur Weiterleitung der Information des anzuzeigenden Betriebszustandes an die externe Logikeinheit und/oder zum Empfang eines Steuersignals von der externen Logikeinheit ohne direkte logische Verbindung einer von dem technischen Gerät kommenden Eingangsleitung mit einer Steuerleitung zur Ansteuerung des einen oder der mehreren Anzeige- oder Warnelemente ausgebildet ist. Unter einer logischen Verbindung ist dabei eine digital kodierte Verbindungsleitung oder ein digital kodierter drahtloser Verbindungskanal zu verstehen, wobei eine Stromversorgung über das technische Gerät für den Betrieb des einen oder der mehreren Anzeige- oder Warnelemente vorhanden sein kann.

Dadurch ist eine logische bzw. digital kodierte Ansteuerung des einen oder der mehreren Anzeige- oder Warnelemente abweichend vom eingehenden Signal des technischen Gerätes möglich.

In einer besonderen Ausführung der Erfindung wird die Schnittstelleneinheit zur Weiterleitung der Information des anzuzeigenden Betriebszustandes an die externe Logikeinheit und/oder zum Empfang eines Steuersignals von der externen Logikeinheit ohne Zwischenschaltung einer internen Logikeinheit ausgebildet. Dadurch wird gewährleistet, dass die externe Logikeinheit zum einen die von dem technischen Gerät eingehenden Informationen unverändert erhält und zum anderen die Ansteuerung des oder der Anzeige-oder Warnelemente ohne Einfluss einer solchen internen Logikeinheit erfolgt.

In einer Weiterbildung dieser Ausführung wird gar keine interne Vorrichtung zur direkten Ansteuerung des einen oder der mehreren Anzeige- oder Warnelemente unter Umgehung der externen Logikeinheit vorgesehen. Somit ist sichergestellt, dass alle Anzeige- oder Warnvorgänge, die durch die Betriebszustandsanzeigevorrichtung vorgenommen werden, und alle von dem jeweiligen technischen Gerät eingehenden Signale durch die externe Logikeinheit erfassbar sind.

In einer anderen Ausführung wird jedoch eine zusätzliche interne Logikeinheit vorgesehen, um die bekannten Funktionen nach dem Stand der Technik zusätzlich anzubieten.

In einer bevorzugten Ausführungsform einer erfindungsgemäßen Vorrichtung wird diese als modulare Signalsäule mit Wechselmodulen ausgebildet. So lässt sich eine erfindungsgemäße Vorrichtung auf einfache Art mit unterschiedlichsten Wechselmodulen konfigurieren.

Darüber hinaus ist die Verwendung herkömmlicher modularer Signalsäulen durch Einbindung eines Moduls, das die Schnittstelleneinheit umfasst, zur Verwirklichung einer erfindungsgemäßen Vorrichtung möglich. In diesem Fall muss zur Realisierung der Erfindung somit nur noch ein Modul mit Schnittstelleneinheit zusätzlich erstellt werden.

Ein solches Modul kann als Sockelmodul ausgebildet werden, über das die Vorrichtung mit dem technischen Gerät in Verbindung steht, dessen Betriebszustand angezeigt bzw. erfasst werden soll. Die erfindungsgemäße Schnittstelleneinheit ist dann in diesem Sockelmodul untergebracht.

In einer vorteilhaften Ausführungsform wird die Schnittstelleneinheit in einem Wechselmodul vorgesehen, wodurch die Flexibilität in der Konfiguration erfindungsgemäße Vorrichtung weiter erhöht wird.

Zur Verbesserung der Datensicherheit wird die Schnittstelleneinheit vorteilhafterweise mit einer Verschlüsselungseinheit versehen, um einen verschlüsselten Datenaustausch mit der externen Logikeinheit zu ermöglichen.

Weiterhin wird in einer vorteilhaften Weiterbildung der Erfindung eine Steuerleitung zur Verbindung der Schnittstelleneinheit mit dem technischen Gerät vorgesehen, mittels der das technische Gerät von der externen Logikeinheit aus ansteuerbar ist. Diese Steuerleitung kann verkabelt oder drahtlos ausgebildet werden. Eine Verkabelung ist in diesem Fall problemlos möglich, da derartige Anzeigevorrichtungen üblicherweise mit dem technischen Gerät, dessen Betriebszustände angezeigt werden sollen, verkabelt sind. Im Falle einer Drahtlosverbindung müsste hierzu in dem technischen Gerät eine entsprechende Sende- und Empfangseinheit vorgesehen werden.

Die externe Logikeinheit wird vorteilhafterweise als Teil einer Datenverarbeitungsanlage ausgebildet, um die o.a. Funktionen der Berücksichtigung weiterer externer Informationen zu verwirklichen.

Bevorzugt wird weiterhin eine drahtlose Verbindung zwischen der Schnittstelleneinheit und der externen Logikeinheit bzw. der zugehörigen Datenverarbeitungsanlage vorgesehen, wodurch eine einfache Installation, insbesondere in Verbindung mit mehreren erfinderischen Anzeigevorrichtungen möglich ist. Die drahtlose Verbindung kann als Funkverbindung mit verschiedenen Kommunikationsprotokollen ausgeprägt sein, beispielsweise unter Zuhilfenahme herkömmlicher standardisierter Verbindungsarten und/oder Verbindungsfrequenzen wie beispielsweise: GSM, GPRS, Edge, 3G, 5G, LTE, LTE Narrow Band, LTE-M1, 169 MHz, 868 MHz, 2,4 GHz, 5 GHz, Bluetooth, Wifi, NFC, RFID, Thread, 6Low PAN, ZigBee, IEEE802.15.4 MAC, Proprietär, etc.

Neben einer elektromagnetischen Informationsübertragung, wie beispielsweise die angeführten Funkverbindungen oder einer Signalübertragung mit sichtbarem Licht könnte die drahtlose Verbindung auch auf der Basis von Ultraschall erfolgen. Eine Ultraschallübertragung bietet insbesondere im Nahbereich oder in einer Umgebung Vorteile, in der mit starken elektromagnetischen Störungen zu rechnen ist.

Wie bereits oben angeführt ist es vorteilhaft, wenn mehrere Betriebszustands-Anzeigevorrichtungen mit der gleichen externen Logikeinheit verbunden werden. Insbesondere kann damit auch ein Netzwerk aufgebaut werden, in dem in einer besonderen Ausführungsform auch eine indirekte Verbindung einer erfindungsgemäßen Anzeigevorrichtung mit der externen Logikeinheit über den Umweg zwischen geschalteter Anzeigevorrichtungen ermöglicht wird.

In einer besonderen Ausführungsform umfasst die Datenverarbeitungsanlage eine Speicher- und/oder Auswerteeinheit zur Speicherung und/oder Auswertung der eingehenden Informationen über die Betriebszustände und/oder der abgesandten Steuersignale zur Anzeige. Mithilfe der Datenverarbeitung ist eine umfassende Auswertung der erfassten Betriebszustände insbesondere über längere Zeiträume und unter Berücksichtigung zusätzlicher externer Informationen wie oben aufgeführt möglich. Diese Auswertung kann eine umfassende Datenbank und deren Auswertung beinhalten, wobei alle Möglichkeiten, die sich derzeit oder in Zukunft ergeben, Verwendung finden können, um Informationen zu gewinnen. Diese Informationen können zur Steuerung der Produktion, zur Aufrechterhaltung der Maschinenfunktionen, für Prognose- oder Wahrscheinlichkeitsaussagen bis hin zum Erhalt von logistischen Informationen, Informationen zum Controlling oder anderer kaufmännischer Notwendigkeiten dienen.

Die gewonnenen Informationen können unmittelbar mit entsprechenden Steuerungsreaktionen für den Betrieb des bzw. der technischen Geräte oder entsprechender Anzeigen verknüpft werden. So kann die Auswerteeinheit Schaltsignale parametrieren, um die Anzeigevorrichtung und/oder das technische Gerät anzusteuern.

So können beispielsweise über einen oder mehrere Betriebszustände hinaus über die Anzeige- oder Warnelemente Mitteilungen erzeugt werden, um prognostizierte Ereignisse im Produktionsablauf anzuzeigen. Beispielsweise kann so rechtzeitig auf die Notwendigkeit eines alsbald erforderlichen Teilnachschubs, auf die Abfuhr voller Magazine oder dgl. mittels der Anzeigevorrichtung hingewiesen werden. Auch die Anzeige von Produkteigenschaften, die von äußeren, über die Auswerteeinheit berücksichtigten Parametern, z. B. Sensordaten, etc. abhängen, kann so erfolgen. So kann eine Bedienperson beispielsweise auf eine erforderliche Überprüfung von Maschineneinstellungen, eine Teilequalität oder dgl. über die Anzeigevorrichtung hingewiesen werden.

Auch die variable Generierung von Sprachausgaben zur Instruktion oder Warnung von Personen, insbesondere über eine Sprachsynthese für akustische Anzeige- oder Warnelemente ist denkbar.

Diese Anwendungen zeigen beispielsweise, wie durch die externe Ansteuerung der Anzeige- und Warnelemente die Anzeige und Warnfunktion erheblich erweiterbar ist.

Denkbar ist hierbei der Einsatz unterschiedlicher Algorithmen bis hin zur Verwendung künstlicher Intelligenz, neuronaler Netze, eines kognitiven Service, eines Cloud Service, einer IoT (Internet of things)-Plattform o.ä.

Ein erfindungsgemäßes Anzeigegerät stellt somit eine Quelle für die Erfassung von Betriebsdaten dar und dient zugleich als Anzeige- und/oder Steuerungseinheit für eine Vielzahl an Maßnahmen, die aus der Auswertung resultieren bzw. in der Auswerteeinheit generiert werden, wobei insbesondere auch weitere Daten, z.B. aus der Umgebung, weiteren Datenbanken, etc., oder vorgegebene Regeln in die Auswertung einfließen können.

Die Auswerteeinheit kann zudem auch noch andere Geräte verwalten und die mittels der erfindungsgemäßen Anzeigevorrichtung gewonnenen Daten dafür verwenden.

Ein Ausführungsbeispiel der Erfindung ist in Zeichnungen dargestellt und wird anhand der Figuren nachfolgend näher erläutert.

Im Einzelnen zeigen
Fig. 1 ein Blockdiagramm zur Veranschaulichung des Aufbaus eines Sockel- und/oder Wechselmoduls mit erfindungsgemäßer Schnittstelle,
Fig. 2 ein Blockdiagramm zur Veranschaulichung der Funktion einer erfindungsgemäßen externen Steuerungseinheit,
Fig. 3 ein Blockdiagramm zur Veranschaulichung der externen Ansteuerung einer Signalsäule und
Fig.4 ein Blockdiagramm zur Veranschaulichung eines Netzwerks aus verschiedenen Signalsäulen mit externer Logikeinheit.

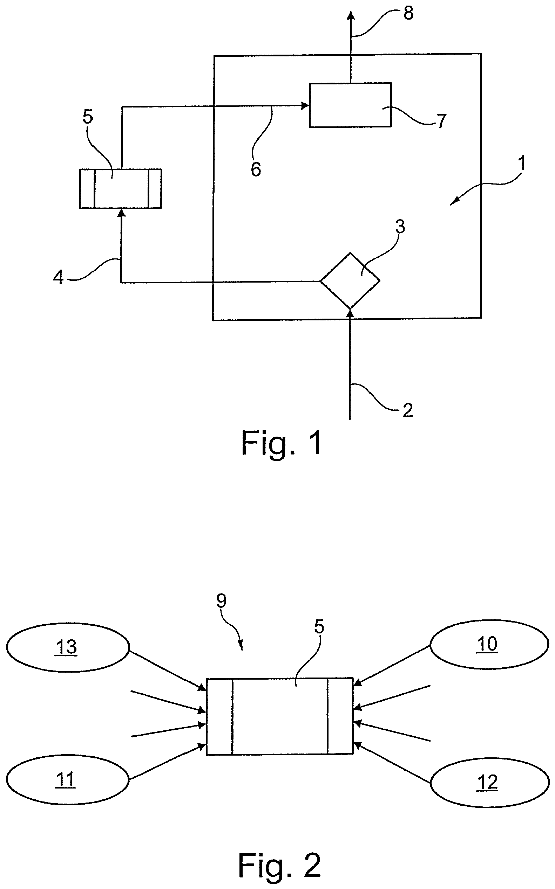

In Fig. 1 ist ein Schnittstellenmodul 1 einer erfindungsgemäßen Anzeigevorrichtung insbesondere einer Signalsäule dargestellt. Eine Eingangsleitung 2 kommt von einem technischen Gerät, dessen Betriebszustand anzuzeigen ist, z.B. einer Maschine o. dgl.

Eine Weiterleitungseinheit, insbesondere in Form einer drahtlosen Sendeeinheit 3, dient zur Weiterleitung eines oder mehrerer Signale, beispielsweise einer Maschine, über einen Verbindungskanal 4, der bevorzugt drahtlos ausgebildet ist, zu einer externen Logikeinheit 5.

Über einen wiederum bevorzugt drahtlos ausgebildeten Steuerkanal 6 ist die externe Logikeinheit mit einer Empfangseinheit 7 der Schnittstelleneinheit 1 verbunden, von der aus eine oder mehrere Steuerleitungen 8 zu den einzelnen nicht dargestellten Anzeige-oder Warnelementen, z.B. in Form von vorzugsweise verschiedenfarbigen Leuchtelementen oder zu Akustikelementen führen.

Fig. 2 zeigt eine Ausführung, in der die Logikeinheit 5 Teil einer Auswerteeinheit 9 einer Datenverarbeitungsanlage ist, die neben den von der Schnittstelleneinheit gelieferten Daten weitere verschiedene Eingangsdaten zur Auswertung und Ansteuerung heranziehen kann. So sind beispielsweise Kundendaten 10, z. B. über Lieferzeiten, Lieferumfänge etc., vorgegebene Signalzustände 11, z.B. zur Anzeige externer Zustände, Ereignisse oder dergleichen, wie ein zu erwartender Lieferengpass, eine kurzfristige Auftragsumstellung etc., Standortdaten 12 von Personen und/oder Maschinen und Auftragsdaten 13 dargestellt.

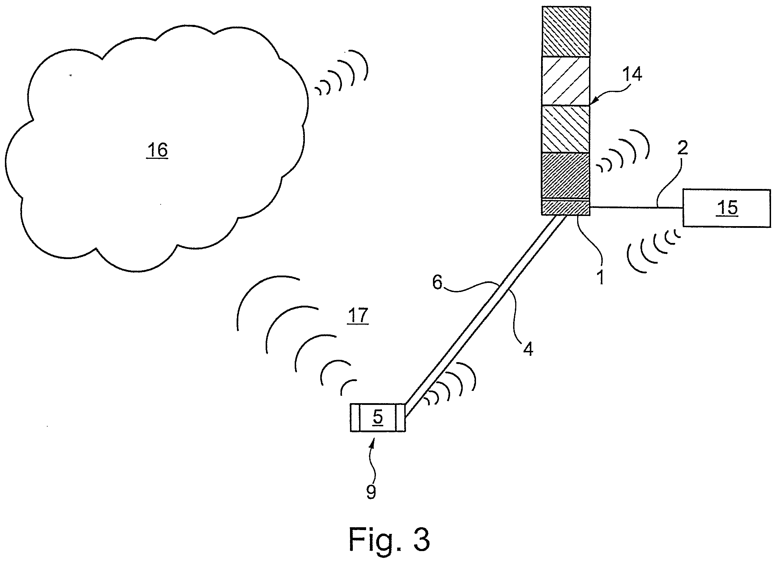

In Fig. 3 ist eine Signalsäule 14 als Beispiel für eine erfindungsgemäße Anzeigevorrichtung und eine Maschine 15 als Beispiel für ein technisches Gerät, dessen Betriebszustand oder Betriebszustände anzuzeigen sind, dargestellt. Weiterhin ist eine Cloud 16 vorhanden, die zur Übermittlung von Daten und/oder Programme mit der Auswerteeinheit 9 bzw. deren Logikeinheit 5 bevorzugt über einen drahtlosen Verbindungkanal 17 in Verbindung steht. Alle Verbindungen sind auch als drahtlose Verbindungen dargestellt. Zusätzlich zu der Schnittstellenverbindung über das als Sockelmodul dargestellte Schnittstellenmodul 1 hinaus kann die Maschine 15 auch direkt mit der Cloud in Verbindung stehen, um Maschinendaten zu übermitteln, die bei der Ansteuerung der Signalsäule 14 Verwendung finden können.

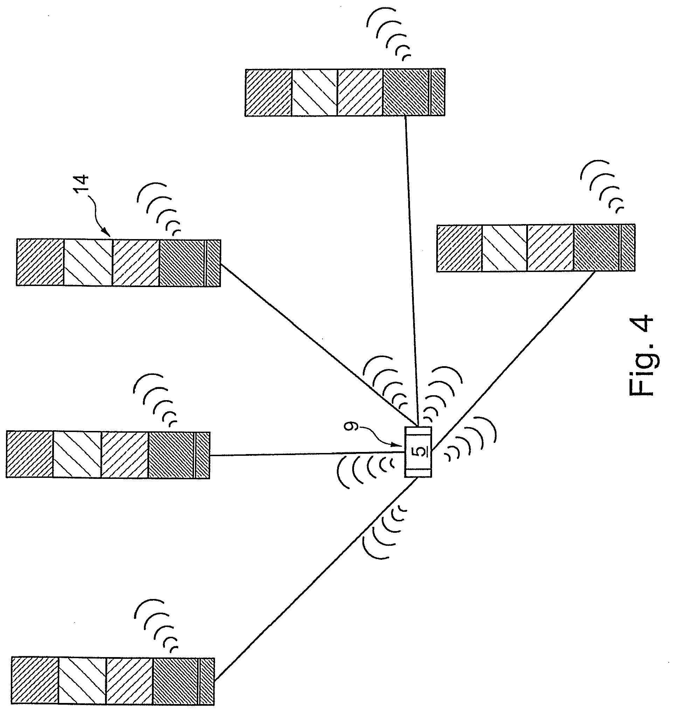

Die Darstellung gemäß Fig. 4 veranschaulicht ein Netzwerk aus verschiedenen Signalsäulen 14, die mit einer externen Logikeinheit 5 bzw. Auswerteeinheit 9 in Verbindung stehen. Diese Ausführung ist sternförmig aufgebaut. Andere Netzwerkskonfigurationen sind jedoch denkbar, insbesondere auch unter Verwendung mehrerer Logikeinheiten 5 bzw. Auswerteeinheiten 9.

Die dargestellte Ausführung mit einer Logikeinheit 5 und einer Auswerteeinheit 9 bietet jedoch den Vorteil, dass alle Daten und Steuervorgänge zentral erfasst und somit auch zentral verarbeitet werden können, so dass eine vollständige Datenerfassung, z.B. zur Erstellung einer Datenbank leicht realisierbar ist.

### Bezugszeichenliste

1. Schnittstelleneinheit
2. Eingangsleitung
3. Sendeeinheit
4. Verbindungskanal
5. Externe Logikeinheit
6. Steuerkanal
7. Empfangseinheit
8. Steuerleitung
9. Auswerteeinheit
10. Kundendaten
11. Signalzustände
12. Standortdaten
13. Auftragsdaten
14. Signalsäule
15. Maschine
16. Cloud
17. Verbindungskanal

## Patentansprüche

1. Betriebszustandsanzeigevorrichtung (1) zur optischen und/oder akustischen Anzeige von wenigstens einem Betriebszustand bzw. von mehreren, unterschiedlichen Betriebszuständen eines technischen Gerätes, wie einer Maschine, einer Anlage, eines Fahrzeugs oder dergleichen, mit wenigstens einem optischen und/oder akustischen Anzeige- und/oder Warnelement (2), wobei eine Einstellung und/oder Anpassung zumindest eines Betriebsparameter des Anzeige-und/oder Warnelements wie Leuchtfarbe, Farbintensität, Leuchtbild, Lautstärke, Melodie, Tonfolge oder dergleichen vorgesehen ist, wobei wenigstens eine von dem technischen Gerät kommende Eingangsleitung (2) zur Übermittlung der Information über wenigstens einen Betriebszustand und wenigstens eine Steuerleitung (8) zu dem Anzeige- und/oder Warnelement zur Ansteuerung der Anzeige des Betriebszustandes vorhanden ist, **dadurch gekennzeichnet, dass** eine Schnittstelleneinheit zur Weiterleitung der von dem technischen Gerät eingehenden Information des Betriebszustandes zu einer externen Logikeinheit (5) und/oder zum Empfang eines Steuersignals von der externen Logikeinheit (5) zur direkten Ansteuerung eines oder mehrerer Anzeige- oder Warnelemente vorgesehen ist.

2. Vorrichtung nach Anspruch 1, **dadurch gekennzeichnet, dass** die Schnittstelleneinheit zur Weiterleitung der von dem technischen Gerät eingehenden Information des Betriebszustandes zu einer externen Logikeinheit (5) und/oder zum Empfang eines Steuersignals von der externen Logikeinheit (5) zur direkten Ansteuerung eines oder mehrerer Anzeige-oder Warnelemente ohne Zwischenschaltung einer internen Logikeinheit und/oder ohne direkte logische Verbindung der Eingangsleitung (2) mit der Steuerleitung(8) vorgesehen ist.

3. Vorrichtung nach Anspruch 1 oder 2, **dadurch gekennzeichnet, dass** keine interne Logikeinheit zur direkten Ansteuerung des einen oder der mehreren Anzeige- oder Warnelemente unter Umgehung der externen Logikeinheit (5) vorgesehen ist.

4. Vorrichtung nach einem der vorgenannten Ansprüche ausgenommen Anspruch 3, **dadurch gekennzeichnet, dass** eine zusätzliche, interne Logikeinheit zur direkten Ansteuerung des einen oder der mehreren Anzeige- oder Warnelemente unter Umgehung der externen Logikeinheit vorgesehen ist.

5. Vorrichtung nach einem der vorgenannten Ansprüche, **dadurch gekennzeichnet, dass** die Vorrichtung als modulare Signalsäule mit Wechselmodulen ausgebildet ist und/oder
dass ein Sockelmodul vorgesehen ist, über das die Vorrichtung mit dem technischen Gerät verbindbar ist und das die Schnittstelleneinheit umfasst.

6. Vorrichtung nach einem der vorgenannten Ansprüche, dass ein Wechselmodul vorgesehen ist, das die Schnittstelleneinheit umfasst.

7. Vorrichtung nach einem der vorgenannten Ansprüche, dass die Schnittstelleneinheit eine VerschlüsselungsEinheit für den verschlüsselten Datenaustausch mit der externen Logikeinheit (5) umfasst.

8. Vorrichtung nach einem der vorgenannten Ansprüche **dadurch gekennzeichnet, dass** eine Steuerleitung (8) zur Verbindung der Schnittstelleneinheit mit dem technischen Gerät vorgesehen ist, mittels der das technische Gerät über die Schnittstelleneinheit steuerbar ist.

9. Datenverarbeitungsanlage mit einer Betriebszustandsanzeigevorrichtung (1) nach einem der vorgenannten Ansprüche und mit einer in Bezug zu dieser Betriebszustandsanzeigevorrichtung (1) externen Logikeinheit (5), **dadurch gekennzeichnet, dass** wenigstens eine drahtlose Verbindung zwischen der Schnittstelleneinheit und der externen Logikeinheit (5) vorgesehen ist.

10. Datenverarbeitungsanlage nach Anspruch 9, **dadurch gekennzeichnet, dass** die drahtlose Verbindung eine elektromagnetische Informationsübertragung umfasst und/oder, dass die drahtlose Verbindung eine Informationsübertragung auf der Basis von Ultraschall umfasst.

11. Datenverarbeitungsanlage nach einem der vorgenannten Ansprüche 9 bis 10, **dadurch gekennzeichnet, dass** mehrere Betriebszustands-Anzeigevorrichtungen (14) mit der gleichen externe Logikeinheit (5) verbunden sind.

12. Datenverarbeitungsanlage nach einem der vorgenannten Ansprüche 9 bis 11, **dadurch gekennzeichnet, dass** sie eine Auswerteeinheit (9) zur Speicherung und/oder Auswertung der eingehenden Informationen über den Betriebszustand oder die Betriebszustände und/oder der abgesandten Steuersignale zur Anzeige umfasst.

13. Datenverarbeitungsanlage nach einem der Ansprüche 9 bis 12, **dadurch gekennzeichnet, dass** eine KI (künstliche Intelligenz, Machine Learning oder Data Analytics) installiert und oder dass ein Prognoseprogramm für die Prognose von drohenden Störungen, drohenden Materialmängeln, geplanten oder vorbeugenden Wartungen, anstehenden Personalwechseln, Auftragswechseln, Performance-Problemen, Abweichungen von Istzu Soll-Werten oder dergleichen installiert ist.

14. Datenverarbeitungsanlage nach einem der Ansprüche 9 bis 13, **dadurch gekennzeichnet, dass** die externe Logikeinheit (5) eine Datenaufnahmeeinheit zur Erfassung oder zum Empfang von Parameterdaten für Parameter wie Sensorinformationen, Umgebungsinformationen, Auftragsinformationen, Lagerbestände oder dergleichen aufweist, die für die Ansteuerung der Schnittstelleneinheit der Vorrichtung nach einem der Ansprüche 1 bis 9 verwendbar sind.

15. Datenverarbeitungsanlage nach einem der Ansprüche 9bis 14, **dadurch gekennzeichnet, dass** mehrere drahtlose Verbindungen zu mehreren Vorrichtungen nach einem der Ansprüche 1 bis 9 vorgesehen sind.
